Europäisches Patentamt

(19) European Patent Office

Office européen des brevets

(11) Publication number: **0 224 824**
**B1**

# EUROPEAN PATENT SPECIFICATION

(45) Date of publication of the patent specification:
**24.05.89**

(21) Application number: **86116203.0**

(22) Date of filing: **21.11.86**

(51) Int. Cl.⁴: **F16L 59/16**

(54) Flexible sleeve with sound absorption and thermal insulation properties.

(30) Priority: **06.12.85 IT 6802685**

(43) Date of publication of application:
**10.06.87 Bulletin 87/24**

(45) Publication of the grant of the patent:
**24.05.89 Bulletin 89/21**

(84) Designated Contracting States:
**DE ES FR GB SE**

(56) References cited:
**EP-A- 0 095 582**
**EP-A- 0 139 823**
**FR-A- 1 196 284**
**FR-A- 2 169 478**
**GB-A- 1 244 122**
**US-A- 2 748 803**

**THE OIL AND GAS JOURNAL, vol. 76, 4th**
**September 1978, pages 107-111, Tulsa, Oklahoma, US;**
**M. KAMAL: "Method permits bending**
**polyurethane-coated pipe"**

(73) Proprietor: **FIAT AUTO S.p.A., Corso Giovanni**
**Agnelli 200, I-10135 Torino(IT)**

(72) Inventor: **Vasco, Giuseppe, Corso Vittorio**
**Emanuele, 192/15, I-10100 Torino(IT)**

(74) Representative: **Prato, Roberto et al, c/o Ingg. Carlo e**
**Mario Torta Via Viotti 9, I-10121 Torino(IT)**

## Description

This invention relates to a flexible sleeve with sound absorption and/or thermal insulation properties, particularly for an elbow portion of a duct, for example an engine air intake duct.

Ducts are currently insulated with tapes of suitable materials possessing low thermal conductivity and good deformability, by winding them about the ducts. A further tape is normally wound about the insulation formed in this manner, in order to protect it from external agents.

Insulations formed in the described manner are non-uniform, they have to be formed manually and are thus very costly, and also require special care and ability. In addition, they do not have good sound absorption characteristics.

In the FR-A 2 169 478 there is described a flexible hose in which separate portions of ring, disposed perpendicularly to the tube axis, are incorporated in order to improve the flexibility of the hose; in the US-A 2 748 803 there is disclosed a hose comprising an outer reinforcement provided with a longitudinal stiffening element, from the two lateral edges of which there extends a relative plurality of semi-circular elements which give a cylindrical tube shape to said reinforcement, this latter being external to the hose.

The object of the present invention is to provide a flexible sleeve with sound absorption and/or thermal insulation properties, which is of good resistance to external agents and can be easily adapted, without harming its internal structure, to an elbow portion of a duct.

Further advantages will be apparent from the description given hereinafter.

This object is attained according to the present invention by a flexible sleeve with sound absorption and/or thermal insulation properties, comprising two substantially rectilinear portions forming between them a predetermined angle, an inner core constructed of elastic material and a covering characterised in that the inner core is provided with longitudinal stiffening element, from the two lateral edges of which there extends a respective plurality of semi-circular elements which give a cylindrical tube shape to said core, said covering having a first inner layer formed from expanded plastics material.

The present invention will be more apparent from the description of a preferred embodiment thereof given hereinafter by way of non-limiting example with reference to the accompanying drawings, in which:

Figure 1 is a partial perspective view of sleeve constructed in accordance with the present invention;

Figure 2 is a longitudinal section through the sleeve of Figure 1;

Figure 3 is a section on the line III–III of Figure 2; and

Figure 4 is a partly sectional side view of an inner structure of the sleeve of Figure 1.

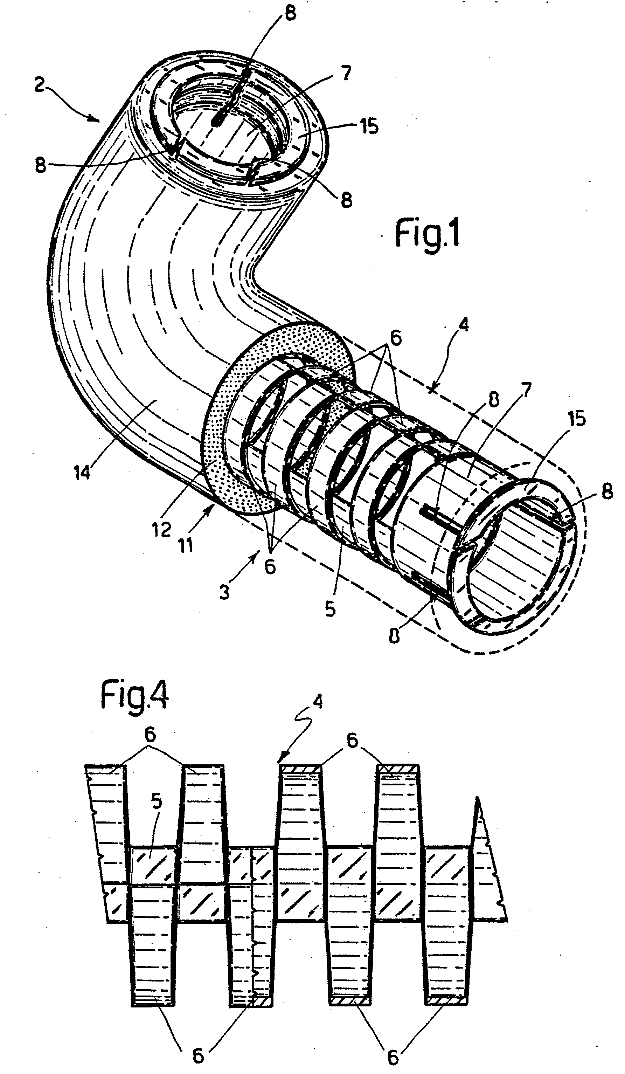

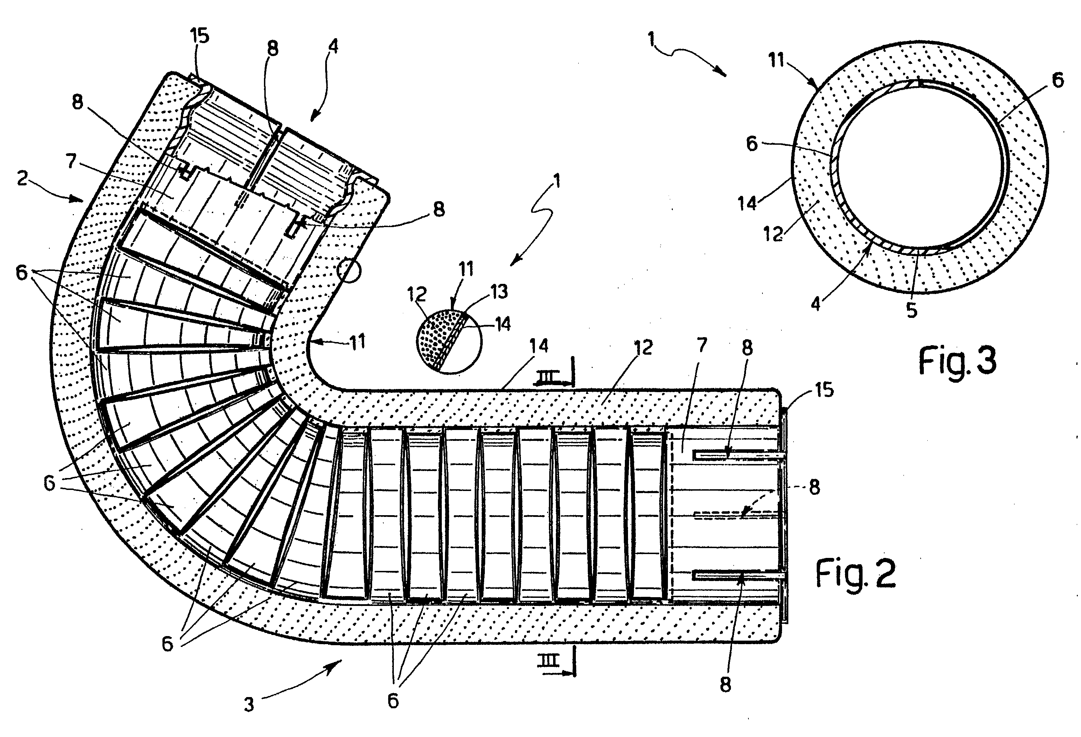

In Figures 1 and 2, the reference numeral 1 indicates overall a flexible sleeve with sound absorption and thermal insulation properties for an elbow portion of a duct, for example an engine air intake duct. The sleeve 1 extends in the form of two substantially rectilinear portions 2 and 3 which form a predetermined angle between them.

The sleeve 1 comprises an inner core 4 formed from elastic material, conveniently a plastics material, and consisting of a longitudinal stiffening element 5, from the two lateral edges of which there extend respective pluralities of semi-circular elements 6 which give said core 4 a cylindrical tube shape. The elements 6 extending from one edge of the element 5 are offset with respect to the elements extending from the other edge (Figures 3 and 4), so that the elements project alternately from the two opposing edges.

Those elements 6 close to and within the connection zone between the portions 2 and 3 are tapered towards their free end as can be clearly seen in the figures.

At the free ends of the portions 2 and 3, the core 4 comprises a respective annular element 7 substantially of the same diameter as and coaxial to the tube defined by the element 5 and the elements 6. In each element 7 there are provided three axial slots 8 disposed in parallel planes which are also parallel to a diametrical plane through the element itself.

The sleeve 1 comprises a covering 11 having a first layer 12 formed from expanded plastics material, preferably open-cell polyurethane, a second thin layer 13 of impermeable plastics material for protecting the first layer 12, and a third layer 14 formed from a sheet of plastics material. The material of the second layer 13 is conveniently the same as that of the first layer 12, but is processed in such a manner as to be impermeable. This second layer can be obtained from polyurethane which has not undergone any open-cell or closed-cell formation treatment, and is therefore continuous and uniform. These processes are well known in the art. The covering 11 completely covers the core 4, and is retained in the position shown in Figure 2 by two flanges 15 which extend from the free ends of the annular elements 7.

By virtue of its shape, the core 4 can be obtained by usual injection-moulding methods using very simple moulds. In this respect, because of their shape, neither the longitudinal stiffening element 5 nor the semi-circular elements 6 result in undercuts, and this also applies to the slots 8 which are disposed in parallel planes, with the result that the moulds can be opened without any impediment.

When in use, the sleeve 1 is mounted on the appropriate duct of the thermal system, and is then slid along to the part of the duct which is to be protected and insulated. It should be noted that because of the particular configuration of the inner core 4, the sleeve 1 adapts to elbow portions of the duct which form any angle, as the core 4 is both flexurally and torsionally deformable.

Because of the slots 8, the elements 7 are elastically deformable and thus the sleeve 1 can be easily connected to other parts of the system and to other protection and insulation elements for the duct.

The advantages of the present invention are apparent from the aforegoing description.

In particular, the sleeve 1 is both flexurally and torsionally deformable and thus can be adapted to duct elbows with any contained angle (flexure) and to elbows with their rectilinear portions disposed in different planes (torsion).

Because of its deformability, the sleeve 1 can be easily slid along the duct.

## Claims

1. A flexible sleeve with sound absorption and/or thermal insulation properties, comprising two substantially rectilinear portions (2 and 3) forming between them a predetermined angle, an inner core (4) constructed of elastic material and a covering (11) characterised in that the inner core is provided with a longitudinal stiffening element (5), from the two lateral edges of which there extends a respective plurality of semi-circular elements (6) which give a cylindrical tube shape to said core (4), said covering (11) having a first inner layer (12) formed from expanded plastics material.

2. A sleeve as claimed in claim 1, characterised in that said first layer (12) is formed from polyurethane.

3. A sleeve as claimed in claim 2, characterised in that said first layer (12) is formed from open-cell polyurethane.

4. A sleeve as claimed in at least one of the preceding claims, characterised in that said covering (11) comprises a second intermediate layer (13) formed from impermeable plastics material.

5. A sleeve as claimed in claim 1, characterised in that said second layer is formed from the same material as the first layer but in which open or closed cells are not present.

6. A sleeve as claimed in one of the preceding claims, characterised in that said covering (11) comprises a third outer protective layer (14) formed from a sheet of plastics material.

7. A sleeve as claimed in at least one of the preceding claims, characterised in that said core (4) comprises at its ends two annular elements (7) coaxial to the tube defined by said semi-circular elements (6).

8. A sleeve as claimed in claim 7, characterised in that said covering (11) lies between two flanges (15) which extend from the free ends of said annular elements (7).

9. A sleeve as claimed in at least one of the preceding claims, characterised in that said semi-circular elements (6) extending from one edge of said stiffening element (5) alternate with said semi-circular elements (6) extending from the other edge of said stiffening element (5).

10. A sleeve as claimed in claim 9, characterised in that those said semi-circular elements provided in correspondence with the connection zone between the said portions (2 and 3) are tapered towards their free ends.

11. A sleeve as claimed in at least one of claims 8 to 10 and dependent on claim 7, characterised in that in each of said annular elements (7) there are provided three axial slots (8) lying in mutually parallel planes.

## Patentansprüche

1. Flexible Muffe mit Eigenschaften wie Schallabsorption und/oder Wärmeisolation, bestehend aus zwei grundsätzlich geradlinigen Teilen (2 und 3), die sich in einem vorbestimmten Winkel treffen, einem inneren Kern (4) aus elastischem Material und einer Verkleidung (11), dadurch gekennzeichnet, daß der innere Kern mit einem länglichen Verstärkungselement (5) versehen ist, von dessen beiden seitlichen Kanten entsprechend mehrere halbkreisförmige Elemente (6) ausgehen, die dem besagten Kern (4) eine röhrenförmige und zylindrische Form verleihen; die besagte Verkleidung (11) besitzt eine erste innere Lage (12), aus Schaumstoff bestehend.

2. Muffe nach Anspruch 1, dadurch gekennzeichnet, daß die besagte erste Lage (12) aus Polyurethan besteht.

3. Muffe nach Anspruch 2, dadurch gekennzeichnet, daß die besagte erste Lage (12) aus Polyurethan und offenen Zellen besteht.

4. Muffe nach einem der vorhergehenden Ansprüche, dadurch gekennzeichnet, daß die besagte Verkleidung (11) eine zweite Zwischenlage (13) umfaßt, die aus wasserdichtem Plastikmaterial besteht.

5. Muffe nach Anspruch 1, dadurch gekennzeichnet, daß besagte zweite Lage aus demselben Material besteht wie die erste, jedoch zudem mit offenen und geschlossenen Zellen versehen ist.

6. Muffe nach einem der vorhergehenden Ansprüche, dadurch gekennzeichnet, daß die besagte Verkleidung (11) eine dritte äußere schützende Lage umfaßt (14), die aus einer Plastikfolie besteht.

7. Muffe nach einem der vorhergehenden Ansprüche, dadurch gekennzeichnet, daß der besagte Kern (4) an seinen äußeren Enden mit zwei ringförmigen Elementen (7) versehen ist, koaxial in Bezug auf das Rohr, das durch die besagten halbkreisförmigen Elemente (6) geformt wird.

8. Muffe nach Anspruch (7), dadurch gekennzeichnet, daß sich die besagte Verkleidung (11) zwischen zwei Flanschen (15) befindet, die von den beiden freien Enden der besagten ringförmigen Elemente (7) ausgehen.

9. Muffe nach einem der vorhergehenden Ansprüche, dadurch gekennzeichnet, daß die besagten halbkreisförmigen Elemente (6), die von einer Kante des besagten Verstärkungselementes (5) ausgehen, sich mit den besagten halbkreisförmigen Elementen (6), die von der anderen Kante des besagten Verstärkungselementes (5) ausgehen, abwechseln.

10. Muffe nach Anspruch 9, dadurch gekennzeichnet, daß die besagten halbkreisförmigen Elemente, die sich im selben Bereich befinden, in dem die besagten Teile (2 und 3) verbunden sind, sich gegen ihr freies Ende hin verdünnen.

11. Muffe nach einem der Ansprüche 8 bis 10 und abhängig von Anspruch 7, dadurch gekennzeichnet, daß in jedem der besagten ringförmigen Elemente (7) drei axiale Öffnungen (8) sind, die auf gegenüberliegenden parallelen Ebenen gelagert sind.

**Revendications**

1. Manchon flexible ayant des propriétés d'absorption sonore et/ou d'isolation thermique, comprenant deux parties (2 et 3), sensiblement rectilignes, formant entre elles un angle prédéterminé, une âme interne (4) construite en matériau élastique et une enveloppe (11), caractérisé en ce que l'âme interne est pourvue d'un élément de renfort longitudinal (5), aux deux bords latéraux duquel s'étendent une pluralité correspondante d'éléments semi-circulaires (6) qui donnent à ladite âme (4) la forme d'un tube cylindrique, ladite enveloppe (11) comprenant une première couche intérieure (12) formée à partir de matière plastique expansée.

2. Manchon selon la revendication 1, caractérisé en ce que ladite première couche (12) est formée à partir de polyuréthane.

3. Manchon selon la revendication 2, caractérisé en ce que ladite première couche (12) est formée à partir de polyuréthane à cellules ouvertes.

4. Manchon selon l'une quelconque des précédentes revendications, caractérisé en ce que ladite enveloppe (11) comprend une seconde couche intermédiaire (13) formée à partir de matière plastique imperméable.

5. Manchon selon la revendication 1, caractérisé en ce que la seconde couche est formée du même matériau que celui de la première couche, mais dans lequel ne sont pas présentes des cellules ouvertes ou fermées.

6. Manchon selon l'une quelconque des précédentes revendications, caractérisé en ce que ladite enveloppe (11) comprend une troisième couche extérieure protectrice (14) formée à partir d'une feuille de matière plastique.

7. Manchon selon l'une quelconque des précédentes revendications, caractérisé en ce que ladite âme (4) comprend à ses extrémités deux éléments annulaires (7) coaxiaux au tube défini par lesdits éléments semi-circulaires (6).

8. Manchon selon la revendication 7, caractérisé en ce que ladite enveloppe (11) est située entre deux collets (15) qui s'étendent à partir des extrémités libres desdits éléments annulaires (7).

9. Manchon selon l'une quelconque des précédentes revendications, caractérisé en ce que lesdits éléments semi-circulaires (6) s'étendant à partir d'un bord dudit élément de renfort (5), alternent avec lesdits éléments semi-circulaires (6) s'étendant à partir de l'autre bord dudit élément de renfort (5).

10. Manchon selon la revendication 9, caractérisé en ce que lesdits éléments semi-circulaires disposés en regard de la zone de raccordement entre lesdites parties (2 et 3) sont effilés en direction de leurs extrémités libres.

11. Manchon selon l'une quelconque des précédentes revendications 8 à 10 et dépendant de la revendication 7, caractérisé en ce que dans chacun desdits éléments annulaires (7) il est prévu trois fentes axiales (8) disposées dans des plans parallèles entre eux.

Fig.1

Fig.4

Fig.2

Fig.3